# EUROPÄISCHE PATENTSCHRIFT

(11) **EP 2 739 515 B1**
(45) Veröffentlichungstag und Bekanntmachung des Hinweises auf die Patenterteilung: **01.02.2017**
(21) Anmeldenummer: 12769010.5
(22) Anmeldetag: 02.08.2012
(51) Int. Cl.: F16H 47/10, B61C 9/18

(54) **ANTRIEBSSTRANG FÜR EIN KRAFTFAHRZEUG, INSBESONDERE SCHIENENFAHRZEUG**
DRIVE TRAIN FOR A MOTOR VEHICLE, IN PARTICULAR A RAIL VEHICLE
GROUPE PROPULSEUR POUR UN VÉHICULE À MOTEUR, PLUS PARTICULIÈREMENT UN VÉHICULE FERROVIAIRE

(30) Priorität: 02.08.2011 DE 102011109113
(43) Veröffentlichungstag der Anmeldung: 11.06.2014
(73) Patentinhaber: Voith Patent GmbH, 89522 Heidenheim (DE)
(72) Erfinder: KOEPERNIK, Uwe, 01187 Dresden (DE); WALTER, Thomas, 89555 Steinheim (DE); BERGER, Jürgen, 89547 Gerstetten (DE)
(74) Vertreter: Dr. Weitzel & Partner
(86) Internationale Anmeldenummer: PCT/EP2012/003285
(87) Internationale Veröffentlichungsnummer: WO 2013/017276

(56) Entgegenhaltungen:
- EP-A2- 0 896 893
- WO-A1-2006/042434
- DE-A1-102004 026 333
- GB-A- 884 562

## Beschreibung

Die vorliegende Erfindung betrifft einen Antriebsstrang für ein Kraftfahrzeug, insbesondere Schienenfahrzeug, beispielsweise für eine Rangierlokomotive, Mehrzwecklokomotive, Streckenlokomotive oder einen Triebwagen, im Einzelnen gemäß dem Oberbegriff von Anspruch 1.

Antriebsstränge, wie sie die vorliegende Erfindung betrifft, weisen wenigstens eine Antriebsmaschine oder auch eine Vielzahl von Antriebsmaschinen auf, die ihre Antriebsleistung in der Regel über ein oder mehrere nachgeordnete Getriebe auf Antriebsräder, die beispielsweise in einem Drehgestell gelagert sind, übertragen. Die Antriebsleistung kann dabei auf die Antriebsräder eines einzigen Drehgestells oder auf die Antriebsräder mehrerer Drehgestelle übertragen werden.

Für die Leistungsübertragung sind im Schienenfahrzeugbereich verschiedene Übertragungstechniken bekannt, die beispielweise hydrostatische oder hydrodynamische Kreisläufe nutzen. Insbesondere im Bereich der Lokomotiven, ganz besonders Rangierlokomotiven, hat sich jedoch die hydrodynamische Leistungsübertragung als vorzuziehende Ausführungsform bewährt, aufgrund der Möglichkeit des verschleißfreien Anfahrens auch mit besonders hohen Antriebsmomenten. Beispiele für Antriebsstränge mit entsprechenden hydrodynamischen Komponenten werden in den folgenden Druckschriften angegeben:
DE 31 23 133 A1
DE 37 30 340 A1
DE 10 2008 011 386 B3
DE 966 733 A
DE 967 273 A
DE 10 2004 026 333 A1.

Die weitere vorveröffentlichte Schrift GB 884 562 A offenbart einen Antriebsstrang für ein Kraftfahrzeug mit einer Antriebsmaschine, einer der Antriebsmaschine in Richtung des Antriebsleistungsflusses nachgeschalteten Leistungsverzweigung, welche die Antriebsleistung in mehrere zueinander parallele Leistungszweige aufteilt, und mit einem Summiergetriebe, welches die Antriebsleistung aus den mehreren parallelen Leistungszweigen zusammenführt und die zusammengeführte Antriebsleistung zum Abtrieb von Antriebsrädern des Kraftfahrzeugs weiterleitet. Zuzüglich zu den beiden aus dieser Schrift bekannten hydrodynamischen Wandlern ist auch ein dritter Leistungszweig vorgesehen, um Antriebsleistung von der Antriebsmaschine zu den Antriebsrädern zu übertragen, wofür eine hydrodynamische Kupplung vorgesehen ist, so dass die zwei (oder mehr) vergleichsweise kleinen hydrodynamischen Wandler und die Kupplung verwendet werden können, um die Antriebsleistung der Antriebsmaschine auf verschiedene Leistungszweige aufzuteilen. Demnach erfolgt keine mechanische Leistungsübertragung parallel zu der hydrodynamischen Leistungsübertragung in anderen Zweigen.

Die o.g. Offenlegungsschrift DE 10 2004 026 333 A1 beschreibt ein hydrodynamisches Mehrkreislaufgetriebe mit zwei zueinander parallelen Leistungszweigen, umfassend jeweils einen hydrodynamischen Wandler und gemäß einer besonders vorteilhaften Ausgestaltung jeweils zwei hydrodynamische Wandler. Über ein den parallelen Leistungszweigen nachgeschaltetes Summiergetriebe wird die Antriebsleistung beider paralleler Leistungszweige vereint und einem Getriebeausgang zugeführt. Die Antriebsleistungsübertragung ist entweder über den ersten Leistungszweig, den zweiten Leistungszweig oder gleichzeitig über beide Leistungszweige übertragbar, wodurch ein besonders hoher Einsatzbereich erreicht wird.

Die aus dem Dokument DE 10 2004 026 333 A1 bekannten Merkmale sind im Oberbegriff von Anspruch 1 zusammengefasst.

Obwohl somit bereits verschiedene Antriebsstränge, insbesondere für Schienenfahrzeuge, mit hydrodynamischer Leistungsübertragung zur Verfügung stehen, gibt es einen Bedarf an insbesondere hinsichtlich des Kraftstoffverbrauchs verbesserten Ausführungsformen, die gleichzeitig auch die bisher erreichten Vorteile zu Verfügung stellen.

Die erfindungsgemäße Aufgabe wird durch einen Antriebsstrang mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Antriebsstrang für ein Kraftfahrzeug, insbesondere Schienenfahrzeug, hierbei besonders Rangierlokomotive, weist wenigstens eine Antriebsmaschine oder eine Vielzahl von Antriebsmaschinen auf, die zum Antrieb des Fahrzeugs Antriebsleistung erzeugt oder erzeugen. Durch die Antriebsmaschinen kann auch ein Hybridantriebsstrang gebildet werden, indem beispielweise ein Verbrennungsmotor, insbesondere Dieselmotor, mit einem Elektromotor oder einer Vielzahl von Elektromotoren kombiniert wird, wobei die Elektromotoren gemäß einer Ausführungsform auch generatorisch betreibbar sind, um Bremsenergie in elektrische Energie umzuwandeln.

Der erfindungsgemäße Antriebsstrang weist ferner eine der Antriebsmaschine in Richtung des Antriebsleistungsflusses nachgeschaltete Leistungsverzweigung auf, welche die Antriebsleistung der einen oder mehreren Antriebsmaschinen in mehrere hinsichtlich des Antriebsleistungsflusses parallel zueinander angeordnete Leistungszweige aufteilt.

Erfindungsgemäß ist ferner ein Summiergetriebe vorgesehen, welches die Antriebsleistung aus den mehreren parallelen Leistungszweigen wieder zusammenführt und die zusammengeführte Antriebsleistung zum Antrieb von Antriebsrädern des Kraftfahrzeugs weiterleitet. Der Antrieb der Antriebsräder kann dabei gemäß der Beschreibungseinleitung erfolgen, nämlich entweder auf nur einen Satz Antriebsräder in einem Drehgestell oder auf verschiedene Sätze von Antriebsrädern im selben oder in verschiedenen Drehgestellen.

Die parallelen Leistungszweige umfassen einen ersten Leistungszweig, in dem ein erster hydrodynamischer Wandler und/oder eine erste hydrodynamische Kupplung vorgesehen ist, um mit diesem beziehungsweise dieser die Antriebsleistung des ersten Leistungszweiges hydrodynamisch zu übertragen. Ein solcher Wandler beziehungsweise eine solche Kupplung ist insbesondere frei von einer mechanischen Überbrückungskupplung und die Leistungsübertragung erfolgt stets hydrodynamisch. Gemäß einer alternativen Ausführungsform kann eine Überbrückungskupplung vorgesehen sein.

Die parallelen Leistungszweige umfassen ferner einen zweiten Leistungszweig, in welchem eine zweite hydrodynamische Kupplung und/oder ein zweiter hydrodynamischer Wandler vorgesehen ist, zur hydrodynamischen Leistungsübertragung der Antriebsleistung im zweiten Leistungszweig. Zur hydrodynamischen Kupplung beziehungsweise zum hydrodynamischen Wandler gilt das zum ersten Leistungszweig gesagte.

Erfindungsgemäß ist nun ein dritter rein mechanischer Leistungszweig vorgesehen, der hinsichtlich des Antriebsleistungsflusses parallel zum ersten Leistungszweig und zum zweiten Leistungszweig geschaltet ist und Antriebsleistung rein mechanisch parallel zur hydrodynamischen Leistungsübertragung in dem ersten Leistungszweig und/oder in dem zweiten Leistungszweig überträgt.

Durch die erfindungsgemäße Aufteilung der Antriebsleistung der wenigstens einen Antriebsmaschine auf wenigstens zwei hydrodynamische und wenigstens einen mechanischen Leistungszweig, wobei die Leistung insbesondere ausschließlich in den hydrodynamischen Leistungszweigen mittels der dort vorgesehenen hydrodynamischen Maschinen entsprechend der Leistungsanforderung zum Antrieb des Kraftfahrzeugs verändert wird, kann ein insbesondere stufenloses hydrodynamisches Getriebe erreicht werden, das hinsichtlich des Wirkungsgrades gegenüber bekannten Ausführungsformen verbessert ist. Besonders durch Verminderung des hydrodynamisch übertragenen Leistungsanteils und Erhöhung des mechanisch übertragenen Leistungsanteils kann der Gesamtwirkungsgrad des Antriebsstrangs gesteigert werden.

Einer, mehrere oder alle vorgesehenen hydrodynamischen Wandler können insbesondere mit einem zentrifugal durchströmten Turbinenrad vorgesehen sein, was sich hinsichtlich des Kennfeldes günstig auswirkt. Ferner kann auf mechanische Schaltelemente, wie Lamellenkupplungen oder Freiläufe, verzichtet werden, um im gesamten Leistungsbereich eine besonders hohe Zuverlässigkeit zu erreichen.

Die hydrodynamischen Kupplungen oder hydrodynamischen Wandler in den zueinander parallel vorgesehenen Leistungszweigen können entweder dieselbe Bauform und/oder maximale Leistungsübertragungsfähigkeit aufweisen oder zueinander verschiedene.

Mit Hilfe einer dem Summiergetriebe nachgeordneten Wendeschaltung beziehungsweise einem entsprechenden Wendeschaltgetriebe kann eine Fahrtrichtungsumkehr des Kraftfahrzeugs realisiert werden. Ferner kann ein Stufenschaltgetriebe dem Summiergetriebe nachgeordnet und/oder der Leistungsverzweigung vorgeordnet werden, um den abzudeckenden Geschwindigkeitsbereich zu erweitern, sowie die Anfahrzugkraft zu vergrößern. Ein solches Stufenschaltgetriebe weist wenigstens zwei wahlweise schaltbare, zueinander verschiedene Übersetzungen auf.

Gemäß einer Weiterbildung der Erfindung ist ein vierter Leistungszweig hinsichtlich des Antriebsleistungsflusses parallel zu den ersten drei Leistungszweigen vorgesehen, der über eine hydrodynamische Bremseinrichtung verfügt. Die hydrodynamische Bremseinrichtung kann beispielsweise durch eine hydrodynamische Kupplung oder einen hydrodynamischen Wandler mit gegenläufig zueinander angetriebenem Pumpenrad und Turbinenrad gebildet werden, um eine hydrodynamische Gegenlaufkupplung oder einen hydrodynamischen Gegenlaufwandler zu schaffen. Zusätzlich oder alternativ kann auch ein hydrodynamischer Retarder mit beschaufeltem Primärrad (Pumpenrad) und beschaufeltem Stator vorgesehen sein.

Alle hydrodynamischen Maschinen sind, wie dem Fachmann bekannt ist, mit wenigstens einem beschaufelten Primärrad und einem beschaufelten Sekundärrad ausgeführt, die gemeinsam einen hydrodynamischen Arbeitsraum ausbilden, in welchem durch einen Arbeitsmediumkreislauf Antriebsleistung hydrodynamisch vom Primärrad auf das Sekundärrad übertragen wird. Hydrodynamische Kupplungen sind frei von einem weiteren Schaufelrad oder beschaufelten Leitelement, wohingegen hydrodynamische Wandler zumindest ein beschaufeltes Leitrad beziehungsweise einen Leitkranz aufweisen und gegebenenfalls auch mehrere Pumpenräder (Primärräder) und/oder Turbinenräder (Sekundärräder) vorgesehen sind.

Wenn ein hydrodynamischer Wandler als hydrodynamische Bremse vorgesehen wird, so kann, zumindest im Bremsbetrieb, dessen Turbinenrad zentripetal durchströmt werden. Dieser Wandler kann gemäß einer Ausführungsform auch zum Fahren in die Gegenrichtung verwendet werden.

Neben dem genannten vierten Leistungszweig ist es natürlich auch zusätzlich oder alternativ möglich, eine hydrodynamische Bremse in einem der ersten drei Leistungszweige vorzusehen.

Gemäß einer vorteilhaften erfindungsgemäßen Ausführungsform erfolgt stets eine gleichzeitige hydrodynamische und mechanische Leistungsübertragung in den parallelen Leistungszweigen, wobei nicht zwingend eine gleichzeitige Leistungsübertragung über alle hydrodynamischen Leistungszweige erfolgen muss. Vielmehr erfolgt gemäß einer Ausführungsform eine hydrodynamische Leistungsübertragung stets nur über einen einzigen hydrodynamischen Leistungszweig kombiniert mit der parallelen mechanischen Leistungsübertragung, oder die Leistungsübertragung kann geschaltet werden zwischen einer gleichzeitigen hydrodynamischen Leistungsübertragung über einen einzigen hydrodynamischen Leistungszweig zusammen mit der mechanischen Leistungsübertragung und einer hydrodynamischen Leistungsübertragung über zwei oder mehr hydrodynamische Leistungszweige zusammen mit der mechanischen Leistungsübertragung.

Wenn keine mechanischen Bremsen und/oder Reibkupplungen in dem Antriebsstrang, insbesondere zwischen der Leistungsverzweigung und dem Summiergetriebe beziehungsweise in einem Getriebe, das die Leistungsverzweigung mit den parallelen Leistungszweigen und das Summiergetriebe zwischen einem Getriebeeingang und einem Getriebeausgang umfasst, vorgesehen sind, so kann kein Verschleiß auftreten und eine Ölbelastung durch Verschleißpartikel wird vermieden.

Wenn ein Stufenschaltgetriebe vorgesehen ist, so kann dieses vorzugsweise einen Rangiergang und einen Fahrgang aufweisen.

Ferner kann ein erster hydrodynamischer Wandler als Anfahrwandler und ein zweiter hydrodynamischer Wandler als Marschwandler ausgeführt sein.

Die Erfindung soll nachfolgend anhand eines Ausführungsbeispiels und der Figur exemplarisch beschrieben werden.

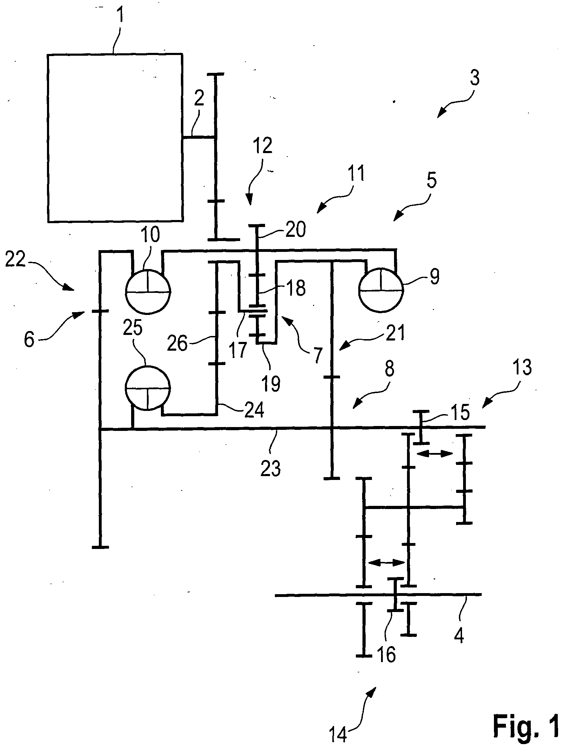

In der Figur 1 erkennt man einen erfindungsgemäßen Antriebsstrang mit einer Antriebsmaschine 1, die Antriebsleistung in einen Getriebeeingang 2 eines Getriebes 3 einspeist. Das Getriebe 3 gibt die Antriebsleistung über einen Getriebeausgang 4 an hier nicht dargestellte Antriebsräder des Kraftfahrzeugs, insbesondere Schienenfahrzeugs, ab.

Das Getriebe 3 weist eine Leistungsverzweigung 11, hier gebildet durch ein Planetengetriebe 12 auf, welche die Antriebsleistung der Antriebsmaschine 1 auf einen ersten Leistungszweig 5 mit einem ersten hydrodynamischen Wandler 9, einen zweiten Leistungszweig 6 mit einem zweiten hydrodynamischen Wandler 10 und auf einen dritten rein mechanischen Leistungszweig 7 aufteilt. Die Antriebsleistung der einzelnen Leistungszweige 5, 6, 7 werden in dem Summiergetriebe 8 vereint und einem nachgeordneten Wendeschaltgetriebe 13 und einem diesem nachgeordneten Stufenschaltgetriebe 14 zugeführt und schließlich zum Getriebeausgang 4. Im Wendeschaltgetriebe 13 ist ein Vorwärtsgang und ein Rückwärtsgang wahlweise durch Verschieben einer axial verschiebbaren Schaltmuffe 15 einschaltbar. Im Stufenschaltgetriebe 14 ist eine erste Schaltstufe mit einer ersten Übersetzung und eine zweite Schaltstufe mit einer zweiten hierzu verschiedenen Übersetzung mittels einer in Axialrichtung verschiebbaren Schaltmuffe 16 einschaltbar. Selbstverständlich könnten das Wendeschaltgetriebe 13 und das Stufenschaltgetriebe 14 auch anders ausgeführt sein oder ganz weggelassen sein.

Das Planetengetriebe 12 weist einen Planetenträger 17 auf, der über den Getriebeeingang 2 von der Antriebsmaschine 1 angetrieben wird. Der Planetenträger 17 trägt ein oder mehrer Planetenräder 18, die einerseits mit dem Hohlrad 19 kämmen, das in mechanischer Triebverbindung mit dem Turbinenrad des ersten Wandlers steht, um den mechanischen dritten Leistungszweig 7 auszubilden, und die mit dem Sonnenrad 20 kämmen, das in mechanischer Triebverbindung mit den Primärrädern des ersten hydrodynamischen Wandlers 9 und des zweiten hydrodynamischen Wandlers 10 steht.

Die beiden Sekundärräder des ersten hydrodynamischen Wandlers 9 und des zweiten hydrodynamischen Wandlers 10 stehen in mechanischer Triebverbindung, hier über jeweils eine Stirnradstufe 21, 22 mit dem Ausgang, hier in Form einer Ausgangswelle 23, des Summiergetriebes 8.

In dem gezeigten Ausführungsbeispiel ist ferner ein vierter Leistungszweig 24 mit einem Gegenlaufwandler 25 parallel zum ersten Leistungszweig 5, zweiten Leistungszweig 6 und dritten Leistungszweig 7 vorgesehen. Vorliegend wird das Primärrad des Gegenlaufwandlers 25 vom Planetenträger 17 über ein Zwischenrad 26 angetrieben und das Sekundärrad des Gegenlaufwandlers 25 wird von der Ausgangswelle 23 beziehungsweise dem Sekundärrad des zweiten hydrodynamischen Wandlers 10 angetrieben.

## Patentansprüche

1. Antriebsstrang für ein Kraftfahrzeug, insbesondere Schienenfahrzeug,
1.1 mit wenigstens einer Antriebsmaschine (1), die Antriebsleistung zum Antrieb des Fahrzeugs erzeugt;
1.2 mit einer der Antriebsmaschine (1) in Richtung des Antriebsleistungsflusses nachgeschalteten Leistungsverzweigung (11), welche die Antriebsleistung in mehrere zueinander parallele Leistungszweige (5, 6, 7, 24) aufteilt;
1.3 mit einem Summiergetriebe (8), welches die Antriebsleistung aus den mehreren parallelen Leistungszweigen (5, 6, 7, 24) zusammenführt und die zusammengeführte Antriebsleistung zum Antrieb von Antriebsrädern des Kraftfahrzeugs weiterleitet; wobei
1.4 die parallelen Leistungszweige (5, 6, 7, 24) einen ersten Leistungszweig (5) mit einer ersten hydrodynamischen Kupplung und/oder einem ersten hydrodynamischen Wandler (9) umfassen, der/die die Antriebsleistung des ersten Leistungszweigs (5) hydrodynamisch überträgt; und
1.5 die parallelen Leistungszweige (5, 6, 7, 24) einen zweiten Leistungszweig (6) mit einer zweiten hydrodynamischen Kupplung und/oder einem zweiten hydrodynamischen Wandler (10) umfassen, der/die die Antriebsleistung des zweiten Leistungszweigs (6) hydrodynamisch überträgt;
**dadurch gekennzeichnet, dass**
1.6 die parallelen Leistungszweige (5, 6, 7, 24) einen dritten rein mechanischen Leistungszweig (7) umfassen, der die Antriebsleistung des dritten Leistungszweigs (7) ausschließlich mechanisch parallel zu der hydrodynamischen Leistungsübertragung im ersten und/oder zweiten Leistungszweig (5, 6) überträgt.

2. Antriebsstrang gemäß Anspruch 1, **dadurch gekennzeichnet, dass** die maximale Leistungsaufnahme der ersten hydrodynamischen Kupplung und/oder des ersten hydrodynamischen Wandlers (9) im ersten Leistungszweig (5) größer als die maximale Leistungsaufnahme der zweiten hydrodynamischen Kupplung und/oder des zweiten hydrodynamischen Wandlers (10) im zweiten Leistungszweig (6) ist.

3. Antriebsstrang gemäß Anspruch 1, **dadurch gekennzeichnet, dass** die maximale Leistungsaufnahme der ersten hydrodynamischen Kupplung und/oder des ersten hydrodynamischen Wandlers (9) im ersten Leistungszweig (5) gleich der maximalen Leistungsaufnahme der zweiten hydrodynamischen Kupplung und/oder des zweiten hydrodynamischen Wandlers (10) im zweiten Leistungszweig (6) ist.

4. Antriebsstrang gemäß einem der Ansprüche 1 bis 3, **dadurch gekennzeichnet, dass** die parallelen Leistungszweige (5, 6, 7, 24) einen vierten Leistungszweig (24) mit gegenläufiger hydrodynamischer Kupplung und/oder gegenläufigem hydrodynamischen Wandler (25) umfassen, die/der ein beschaufeltes Primärrad und ein beschaufeltes Sekundärrad, die in entgegengesetzter Richtung zueinander umlaufend angetrieben werden, aufweist.

5. Antriebsstrang gemäß einem der Ansprüche 1 bis 3, **dadurch gekennzeichnet, dass** die parallelen Leistungszweige (5, 6, 7, 24) einen vierten Leistungszweig (24) mit hydrodynamischem Retarder umfassen, der ein beschaufeltes von der Antriebsleistung im vierten Leistungszweig (24) angetriebenes Primärrad und einen beschaufelten Stator aufweist.

6. Antriebsstrang gemäß einem der Ansprüche 1 bis 5, **dadurch gekennzeichnet, dass** die parallelen Leistungszweige (5, 6, 7, 24) frei von mechanischen Trennkupplungen und insbesondere mechanischen Freiläufen sind.

7. Antriebsstrang gemäß einem der Ansprüche 1 bis 6, **dadurch gekennzeichnet, dass** die Antriebsmaschine (1) ihre Antriebsleistung einem Getriebeeingang (2) eines Getriebes (3) einspeist, das Getriebe (3) die Leistungsverzweigung (11) mit den parallelen Leistungszweigen (5, 6, 7, 24) und das Summiergetriebe (8) umfasst, wobei das Summiergetriebe (8) die Antriebsleistung auf einen Getriebeausgang (4) überträgt, und der Antriebsstrang zwischen Getriebeeingang (2) und Getriebeausgang (4) frei von mechanischen Trennkupplungen und insbesondere frei von mechanischen Freiläufen ist.

8. Antriebsstrang gemäß einem der Ansprüche 1 bis 7, **dadurch gekennzeichnet, dass** dem Summiergetriebe (8) ein Wendeschaltgetriebe (13) zur schaltbaren Umkehr der Drehrichtung des Antriebsleistungsflusses nachgeordnet ist, insbesondere umfassend eine Schiebemuffe (15).

9. Antriebsstrang gemäß einem der Ansprüche 1 bis 8, **dadurch gekennzeichnet, dass** dem Summiergetriebe (8) ein Stufenschaltgetriebe (14) mit wenigstens oder genau zwei wahlweise schaltbaren zueinander verschiedenen Übersetzungen nachgeordnet ist, insbesondere umfassend eine Schiebemuffe (16).

## Claims

1. A drive train for a motor vehicle, especially a rail vehicle,
1.1 having at least one drive machine (1) which generates driving power for driving the vehicle;
1.2 having a power split (11) which is connected downstream of the drive machine (1) in the direction of the driving power flow and which splits the driving power into a plurality of power branches (5, 6, 7, 24) which are parallel with respect to each other;
1.3 having a summation gear (8) which combines the driving power from the plurality of parallel power branches (5, 6, 7, 24) and conducts the combined driving power for driving drive wheels of the motor vehicle, wherein
1.4 the parallel power branches (5, 6, 7, 24) comprise a first power branch (5) with a first hydrodynamic coupling and/or a first hydrodynamic converter (9) which transmits the driving power of the first power branch (5) hydrodynamically, and
1.5 the parallel power branches (5, 6, 7, 24) comprise a second power branch (6) with a second hydrodynamic coupling and/or a second hydrodynamic converter (10) which transmits the driving power of the second power branch (6) hydrodynamically;
**characterized in that**
1.6 the parallel power branches (5, 6, 7, 24) comprise a third, purely mechanical power branch (7) which transmits the driving power of the third power branch (7) exclusively mechanically in parallel with the hydrodynamic power transmission in the first and/or the second power branch (5, 6).

2. A drive train according to claim 1, **characterized in that** the maximum power intake of the first hydrodynamic coupling and/or the first hydrodynamic converter (9) in the first power branch (5) is greater than the maximum power intake of the second hydrodynamic coupling and/or the second hydrodynamic converter (10) in the second power branch (6).

3. A drive train according to claim 1, **characterized in that** the maximum power intake of the first hydrodynamic coupling and/or the first hydrodynamic converter (9) in the first power branch (5) is equal to the maximum power intake of the second hydrodynamic coupling and/or the second hydrodynamic converter (10) in the second power branch (6).

4. A drive train according to one of the claims 1 to 3, **characterized in that** the parallel power branches (5, 6, 7, 24) comprise a fourth power branch (24) with a hydrodynamic coupling working in opposite direction and/or a hydrodynamic converter (25) working in opposite direction, which comprises a bladed primary wheel and a bladed secondary wheel which are revolvingly driven in opposite direction with respect to each other.

5. A drive train according to one of the claims 1 to 3, **characterized in that** the parallel power branches (5, 6, 7, 24) comprise a fourth power branch (24) with a hydrodynamic retarder which comprises a bladed primary wheel, driven by the drive power in the fourth power branch (24), and a bladed stator.

6. A drive train according to one of the claims 1 to 5, **characterized in that** the parallel power branches (5, 6, 7, 24) are free from mechanical separating clutches and especially mechanical freewheels.

7. A drive train according to one of the claims 1 to 6, **characterized in that** the drive machine (1) feeds its drive power to a gearbox input (2) of a gearbox (3), the gear box (3) comprises the power split (11) with the parallel power branches (5, 6, 7, 24) and the summation gear (8), wherein the summation gear (8) transmits the drive power to a gearbox output (4), and the drive train between the gearbox input (2) and the gearbox output (4) is free from mechanical separating clutches and especially free from mechanical freewheels.

8. A drive train according to one of the claims 1 to 7, **characterized in that** the summation gear (8) is provided downstream with a reversing transmission (13) for the shiftable reversal of the direction of rotation of the driving power flow, especially comprising a sliding sleeve (15).

9. A drive train according to one of the claims 1 to 8, **characterized in that** the summation gear (8) is provided downstream with a multi-step transmission (14) with at least or precisely two selectively shiftable gear ratios which differ from each other, especially comprising a sliding sleeve (16).

## Revendications

1. Chaîne de transmission pour un véhicule à moteur, en particulier un véhicule ferroviaire,
1.1 avec au moins un moteur de propulsion (1) qui produit une puissance de propulsion pour propulser le véhicule ;
1.2 avec un branchement de couple (11) monté après le moteur de propulsion (1) dans le sens du flux de puissance de propulsion, qui répartit la puissance de propulsion en plusieurs branches de puissance parallèles (5, 6, 7, 24) ;
1.3 avec un engrenage additionneur (8) qui réunit la puissance de propulsion des plusieurs branches de puissance parallèles (5, 6, 7, 24) et transmet la puissance de propulsion réunie pour entraîner des roues de propulsion du véhicule à moteur ; dans laquelle
1.4 les branches de puissance parallèles (5, 6, 7, 24) comprennent une première branche de puissance (5) avec un premier accouplement hydrodynamique et/ou un premier convertisseur hydrodynamique (9) qui transmet la puissance de propulsion de la première branche de puissance (5) de façon hydrodynamique ; et
1.5 les branches de puissance parallèles (5, 6, 7, 24) comprennent une deuxième branche de puissance (6) avec un deuxième accouplement hydrodynamique et/ou un deuxième convertisseur hydrodynamique (10) qui transmet la puissance de propulsion de la deuxième branche de puissance (6) de façon hydrodynamique ;
**caractérisée en ce que**
1.6 les branches de puissance parallèles (5, 6, 7, 24) comprennent une troisième branche de puissance (7) strictement mécanique qui transmet la puissance de propulsion de la troisième branche de puissance (7) de façon exclusivement mécanique parallèlement à la transmission de puissance hydrodynamique dans la première branche de puissance et/ou la deuxième (5, 6).

2. Chaîne de transmission selon la revendication 1, **caractérisée en ce que** la puissance absorbée maximale du premier accouplement hydrodynamique et/ou du premier convertisseur hydrodynamique (9) dans la première branche de puissance (5) est plus grande que la puissance absorbée maximale du deuxième accouplement hydrodynamique et/ou du deuxième convertisseur hydrodynamique (10) dans la deuxième branche de puissance (6).

3. Chaîne de transmission selon la revendication 1, **caractérisée en ce que** la puissance absorbée maximale du premier accouplement hydrodynamique et/ou du premier convertisseur hydrodynamique (9) dans la première branche de puissance (5) est égale à la puissance absorbée maximale du deuxième accouplement hydrodynamique et/ou du deuxième convertisseur hydrodynamique (10) dans la deuxième branche de puissance (6).

4. Chaîne de transmission selon l'une des revendications 1 à 3, **caractérisée en ce que** les branches de puissance parallèles (5, 6, 7, 24) comprennent une quatrième branche de puissance (24) avec un accouplement hydrodynamique tournant à contre-sens et/ou un convertisseur hydrodynamique tournant à contre-sens (25), qui comporte une roue primaire munie de pales et une roue secondaire munie de pales entraînées dans des sens de rotation opposés.

5. Chaîne de transmission selon l'une des revendications 1 à 3, **caractérisée en ce que** les branches de puissance parallèles (5, 6, 7, 24) comprennent une quatrième branche de puissance (24) avec un retardateur hydrodynamique qui comporte une roue primaire munie de pales entraînée par la puissance de propulsion de la quatrième branche de puissance (24) et un stator muni de pales.

6. Chaîne de transmission selon l'une des revendications 1 à 5, **caractérisée en ce que** les branches de puissance parallèles (5, 6, 7, 24) ne comportement pas d'accouplements de séparation mécaniques et en particulier de mécanismes de marche en roue libre.

7. Chaîne de transmission selon l'une des revendications 1 à 6, **caractérisée en ce que** le moteur de propulsion (1) fournit sa puissance de propulsion à une entrée d'engrenage (2) d'un engrenage (3), l'engrenage (3) comprend le branchement de couple (11) avec les branches de puissance parallèles (5, 6, 7, 24) et l'engrenage additionneur (8), l'engrenage additionneur (8) transmettant la puissance de propulsion à une sortie d'engrenage (4), et la chaîne de transmission entre l'entrée d'engrenage (2) et la sortie d'engrenage (4) ne comporte pas d'accouplements de séparation mécaniques et en particulier de mécanismes de marche en roue libre.

8. Chaîne de transmission selon l'une des revendications 1 à 7, **caractérisé en ce que** l'engrenage additionneur (8) est suivi d'une boîte à inversion (13) pour l'inversion commutable du sens de rotation du flux de puissance de propulsion, comprenant en particulier un manchon baladeur (15).

9. Chaîne de transmission selon l'une des revendications 1 à 8, **caractérisée en ce que** l'engrenage additionneur (8) est suivi d'une boîte à rapports étagés (14) avec au moins ou exactement deux rapports de multiplication différents pouvant être commutés sélectivement, comprenant en particulier un manchon baladeur (16).
